# EUROPEAN PATENT SPECIFICATION

(11) **EP 1 841 684 B1**
(45) Date of publication and mention of the grant of the patent: **18.12.2013**
(21) Application number: 05704743.3
(22) Date of filing: 24.01.2005
(51) Int. Cl.: B67D 7/02, B67D 7/46, B05C 17/01

(54) **ADMINISTERING OF FLOWABLE PRODUCTS**
VERABREICHUNG VON FLIESSFÄHIGEN PRODUKTEN
GESTION DE PRODUITS FLUIDES

(43) Date of publication of application: 10.10.2007
(73) Proprietor: ANAX Sweden AB, 782 34 Malung (SE)
(72) Inventor: NISS, Jan Anders, 78234 Malung (SE); NISS, Alexander, 78234 Malung (SE); NISS, Andreas, SE - 782 34 MALUNG (SE)
(74) Representative: Lundquist, Lars-Olof
(86) International application number: PCT/SE2005/000070
(87) International publication number: WO 2006/078196

(56) References cited:
- US-A- 3 285 202
- US-A- 3 984 033
- US-A- 5 366 117
- US-A- 5 934 509
- US-A1- 2002 166 880

## Description

### TECHNICAL FIELD

The present invention relates generally to the administering of flowable products, and specifically relates to a system, a dispensing means, as well as a method for the administering of specified quantities of flowable products.

### BACKGROUND

Various types of equipment for the repeated dispensing of controlled quantities of flowable products from a container have been used for many applications, such as for administering metered quantities of pharmaceuticals, detergents, lubricants, glue and not least food products, such as condiments as well as pastry or cake dough and/or icing. Within said areas the equipment varies from the simplest form of hand held dispenser, such as a hand pump or manual cartridge gun where the product is discharged from a loaded cartridge by manually operating a plunger, and to automated and quite sophisticated dispensing systems. Generally, it may be stated that the simpler, purely manual equipment does not provide any high accuracy in the dosing or metering of the dispensed product and does not permit any dispensing with high frequency. On the other hand, most existing automated systems are not only complex and expensive but also require much space for the installation.

The above mentioned type of automated dispensing systems would appear to be particularly useful within the food industry, and especially so in fast food establishments such as hamburger restaurants. In such establishments there is need for an accurate and selective dispensing of predetermined quantities of condiments of different viscosity, such as sauces, dressings, mustards and mayonnaise, on the food products during preparation thereof. Nevertheless, most establishments within this area still make use of manual devices such as the above mentioned hand pumps and cartridge type guns that may even be refilled at location, from large buckets. Not only is this handling very unhygienic, since the condiments come into contact with air at an early stage, long before the actual dispensing onto a food product, it is also very time consuming. In addition, the inefficient and inaccurate manual metering of the dispensed product does for the most have the result that the dispensed volumes increase, leading to an added cost for the restaurant.

U.S. Patent No. 5 366 117 therefore discloses one example of an automated system that is primarily intended for dispensing condiments onto food products being prepared. Said patent focuses on providing a hygienic system that maintains the dispensed product in a closed system from its supply container and to the actual dispensing thereof, and that is easy to clean at regular intervals. However, in addition to suffering from said above mentioned disadvantages of being comparatively complex, bulky and expensive, said system does not provide for an accurate volumetric metering and high frequency dispensing of the flowable product. The complexity of said system resides largely in the great number of separately connected components required, such as gas pressure source, pump, regulator and several valves. The insufficient accuracy and speed of said system, with regard to the dosing or metering of specified volumes of the flowable product, is caused by a combination of the design of the dispensing head and the fact that the metering pump is positioned far from the dispensing head. This applies also to the embodiment of said known system that is specifically directed to the use of a portion control module.

Thus, there is a great need within different areas of industry, and specifically within the food industry, for a practically feasible solution that offers means and equipment for securing hygienic, effective and economical dispensing of flowable products.

### SUMMARY

The invention provides a solution overcoming the above discussed problems experienced with the prior known techniques for dispensing flowable products.

It is a general object of the invention to provide an improved system for the accurate and repeated dispensing of fixed portions of a flowable product, which system is compact and inexpensive and is still capable of managing products of various viscosities.

It is a further object of the invention to provide an improved dispensing means for use in the system of the invention.

It is a further object of the invention to provide an improved method of accurately and repeatedly dispensing fixed portions of flowable products of various viscosities, which method permits dispensing at very high rate and with high accuracy.

Briefly, the invention provides a system for administering flowable products, having a product storage container, supply means for feeding the product from the container and into a feeding channel and for applying a feeding pressure to the product and a product dispensing head to which the product is supplied. According to the invention, there is provided an uninterrupted flow of the pressurized product to the inlet of the dispensing head. A product metering chamber is provided in the actual dispensing head, has a predetermined fixed maximum volume corresponding to that of a product portion to be dispensed and is displaceable as a shuttle between a loading position and a dispensing position wherein the metering chamber is collapsed for dispensing the fixed product volume. The suggested system is very compact and provides for a very quick and accurate metering or dosing of the product. The dispensing head is still easily maneuverable and overall user friendly. Therefore, said system provides a unique possibility for efficient and accurate dosing of flowable products of varying viscosity and at high dispensing rate.

According to another aspect of the present invention, there is provided a dispensing head for use in the system of the invention. Briefly, said dispensing head has two relatively displaceably connected pistons that between them form a product metering chamber and that are in turn displaceable in a cylinder between a fixed maximum volume loading position and a collapsible dispensing position.

According to another aspect of the present invention, a method of administering flowable products is provided, wherein a product is fed from a storage container, is pressurized and is fed to an inlet of a product dispensing means from which portions of the product are discharged, and wherein the product is continuously fed to the dispensing means, is selectively introduced into a fixed volume product metering chamber, in a loading position thereof. The metering chamber is then displaced from the loading position, while maintaining its fixed volume, and to a product dispensing position wherein the metering chamber is collapsed to dispense the metered volume of the product.

These and further objects of the invention are met by the invention as defined in the appended patent claims.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, may best be understood by referring to the following description taken together with the accompanying drawings, in which:
- Fig. 1: is a partly schematical illustration of an embodiment of the inventive system for the dispensing of a flowable product;
- Fig. 2A: is an exploded view of a product dispensing means of the system of Fig. 1;
- Fig. 2B: is a partly sectioned side view of the product dispensing means of Fig. 2A;
- Fig. 3: illustrates in detail a double piston of the dispensing means of Figs. 2A and 2B, in a partially sectioned side view;
- Fig. 4: is a bottom plan view of a secondary forward piston of the double piston of Fig. 3;
- Fig. 5: is a bottom plan view of a motor support in the dispensing means of Fig. 2A;
- Fig. 6: is a detailed view of parts of a pressure sensor of the system;
- Fig. 7A: is a partially sectioned view of parts of the dispensing means of Figs. 2A-B, in a product loading position;
- Fig. 7B: is a partially sectioned view of parts of the dispensing means of Figs. 2A-B, in a dispensing position, during dispensing of the product;
- Fig. 7C: is a partially sectioned view of parts of the dispensing means of Figs. 2A-B, after completing dispensing of a predetermined volume of the product; and
- Fig. 7D: is a partially sectioned view of parts of the dispensing means of Figs. 2A-B, during return to the product loading position.

### DETAILED DESCRIPTION

Exemplary illustrative embodiments of the invention will be described below with reference to the drawing figures. The illustrated, embodiments relate to an application of the inventive solution to a dispensing system specifically designed for dispensing food related products, such as condiments, in connection with preparing sandwiches, hamburgers and other so called fast food. However, it shall be emphasized that the invention is not to be restricted to such an application.

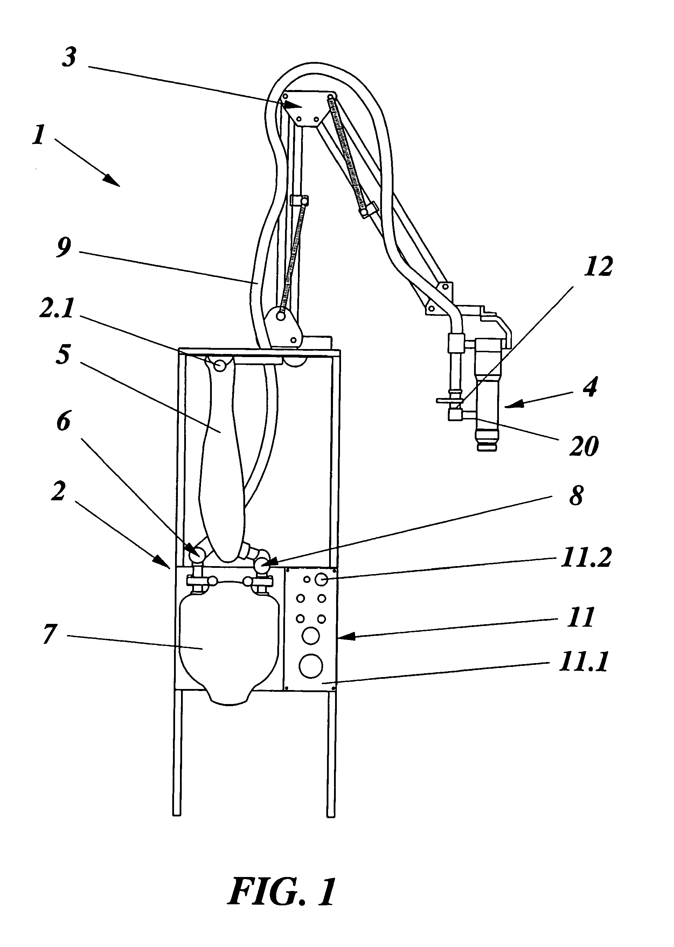

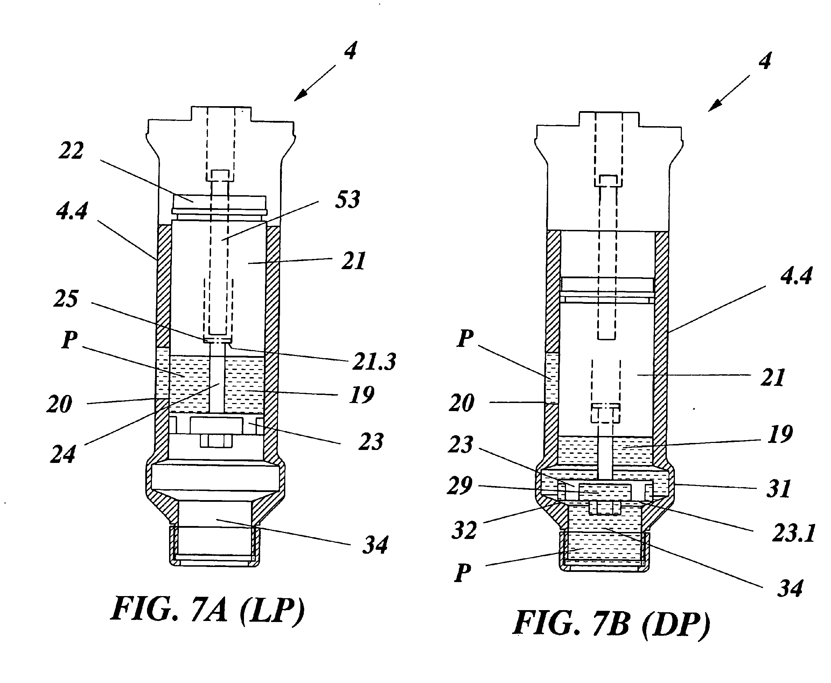

Fig. 1 is a schematical illustration of the complete dispensing system 1 that consists of a frame or stand 2 that in an upper region is provided with a schematically indicated hanger 2.1 from which is suspended a storage container 5 for a flowable product P (see Figs 7A-C) that for the present application may be any type of sauce, mayonnaise or dressing used in the preparation of hamburgers, sandwiches, pizza or other "fast food". It appears from Fig. 1 that the stand 2 has the space and a hanger for an additional storage container in the event that it is desired to be able to switch between two containers in order to secure uninterrupted operation.

The container 5 containing the flowable product P is here a flexible bag type container or "pouch". The area close to the bottom of the container 5 is connected to an inlet of a supply means 7 through connectors 8 that are of a standard type and therefore do not require any further explanation. The supply means 7 is used for feeding the product from the container 5 to a feeding channel 9 and for applying a feed pressure to the product in the feeding channel. In this application the supply means 7 is a peristaltic pump also known as a hose pump. Such pumps are especially advantageous for pumping food related products, since the product does not come into direct contact with any other part of the pump than the inside of the flexible hose and since they have also unexpectedly proven to be very advantageous for the pumping of products, such as condiments, having very varying viscosity/flow characteristics without causing undesirable shearing or breaking of an emulsion. They are also excellent for pumping products containing solids. A control box 11 containing the necessary control units for controlling the supply means 7 and the later described drive motor 50 is also mounted in the stand 2. Furthermore, the control box 11 has a front panel 11.1 with the necessary controls and indicators, such as a system On/Off button 11.2.

The outlet from the supply means 7 is connected, likewise through standard type connectors 6, to the feeding channel or conduit 9 into which the supply means 7 pumps the product and in which it continuously maintains the feed pressure, as will be explained further below. In this application, at least a section of the feeding channel 9 is formed by a resilient, flexible hose that is connected, again by means of a standard type connector 12, to a product inlet 20 of a product dispensing means or head 4 that will be described below. For easy manipulation of the dispensing means it is mounted for rotation around at least two axes, to the free end of a spring balance arm 3 that is in turn fixed to an upper part of the stand 2.

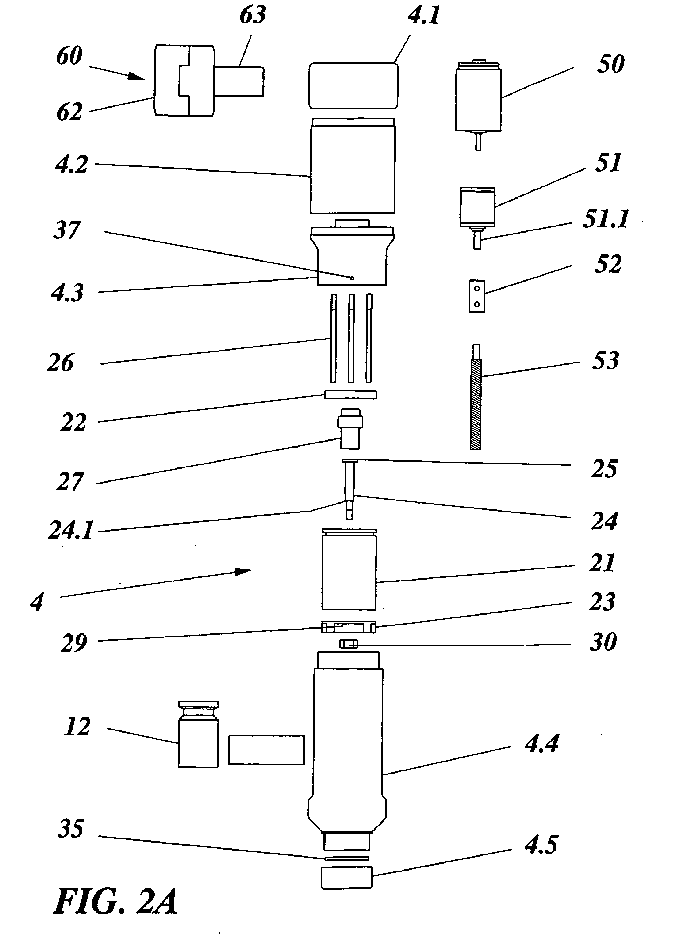

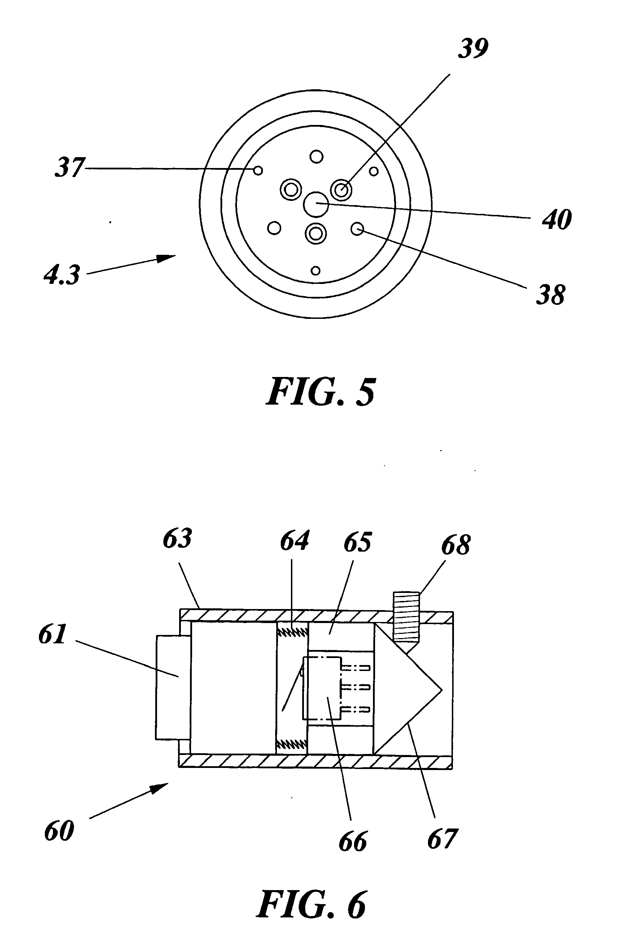

The dispensing means 4 will now be described with specific reference first to Figs 2A-B. For reasons of clarity all reference numbers for the parts of the dispensing means 4 have not been inserted in both drawing figures, which should therefore be viewed together. The dispensing means or head 4 consists of a housing comprising an upper two-piece housing 4.1, 4.2 enclosing a drive motor 50 and transmission 51 package that is mounted on a motor support 4.3 by means of bolts (not specifically shown) that are extended through mounting holes 39 (see Fig. 5) extending through the motor support 4.3. The drive motor 50 is electrical but all wiring has been excluded for simplicity. The output shaft 51.1 of the transmission 51 is fixed to a lead screw 53, which extends freely through a central bore 40 in the motor support 4.3, by means of a standard type lock screw connector 52. Thus, the lead screw 53 is supported by the output shaft 51.1 to rotate with the latter.

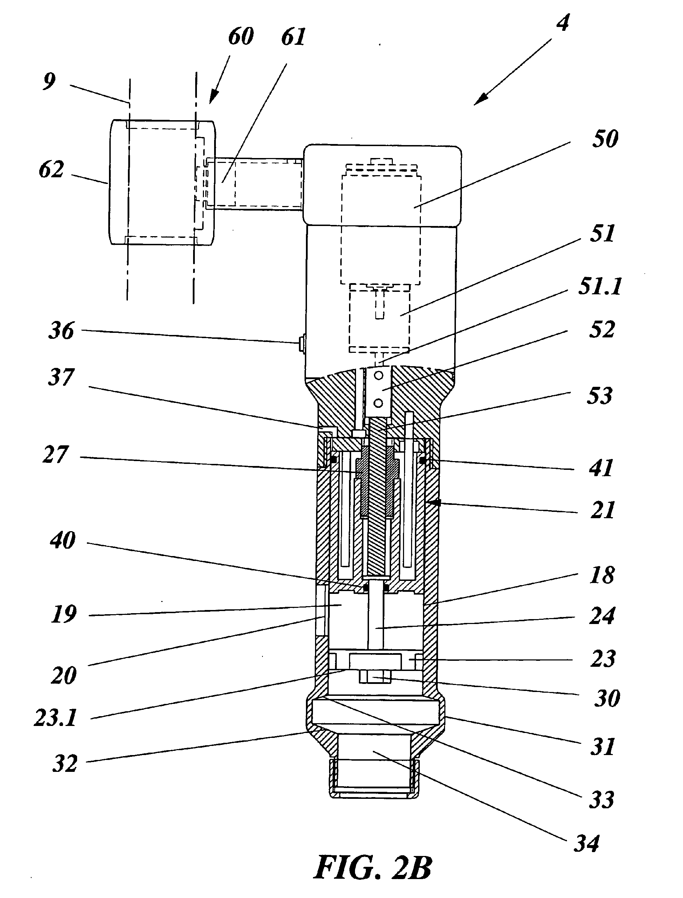

An upper end of a cylinder 4.4 is connected to the lower end of the motor support 4.3, through a threaded connection that is visible in Fig. 2B. Finally, a union nut type holder 4.5 for an outlet diaphragm 35 is screwed onto a lower outlet end of the cylinder 4.4. The outlet diaphragm 35 is not illustrated in full detail but is preferably of a standard type that is frequently used to avoid dripping from dispensers of different types. The cylinder 4.4 axially displaceably receives a double-piston 21-23 that is guided by an inner cylinder wall 18 and that will be described further below. Close to the lower end thereof the cylinder 4.4 has an increased diameter section 31 having an inclined bottom wall 32 and an upper wall 33 that is likewise inclined, but in an opposite direction. The purpose of this increased diameter section 31 will be clarified below.

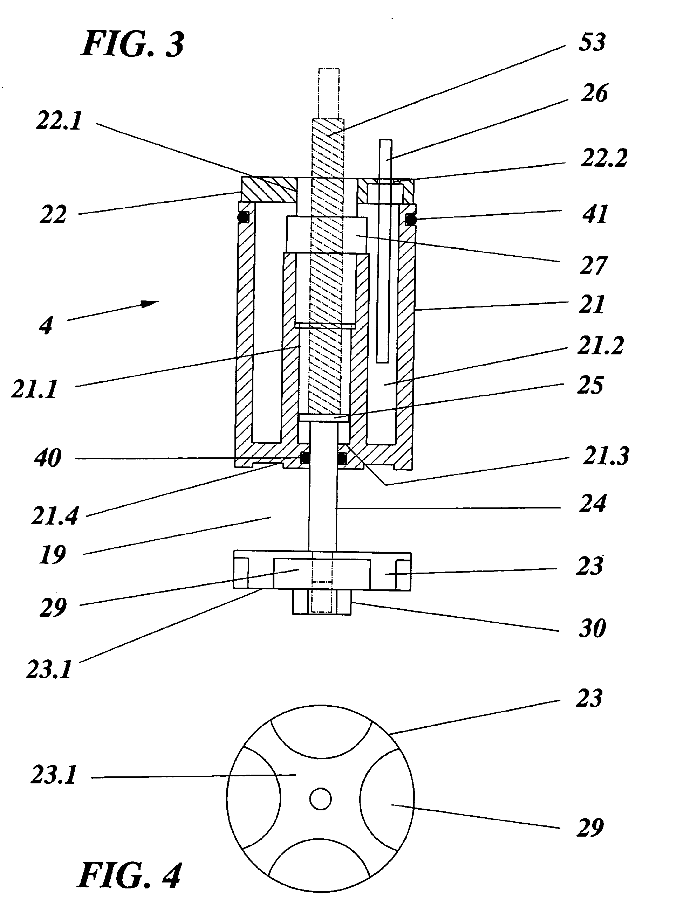

The double-piston 21-23 is illustrated in detail in Figs. 3 and 4 and it consists of a primary piston 21 having an outer diameter that is slightly smaller than the inner diameter of the cylinder, so that it is displaceable therein with a very close fit. To completely seal the primary piston 21 against the inner wall 18 of the cylinder 4.4 it carries an O-ring seal 41 in a groove extending around its outer periphery. The primary piston 21 has an open top, a central, stepped through bore 21.1 and a ring shaped upwardly open groove 21.2 radially outside of the through bore 21.1. In a large diameter upper part of the through bore 21.1, a lead screw nut 27 is rigidly connected to the primary piston 21, in this embodiment through a threaded connection. The nut 27 has inner threads (not shown) that are complementary to the external threads of the lead screw 53 that in the assembled condition of the dispensing means 4 engages the nut 27. A downwardly open groove 21.4 may be provided in a lower surface of the primary piston 21, for reasons that will be explained below.

The upper end of the primary piston 21 is closed by a guide plate 22 that is formed with a central bore 22.1 having an internal thread. The plate 22 is attached to the primary piston 21 by being screwed onto an externally threaded upper portion of the nut 27. The lead screw passes freely through the central bore 22.1. Radially outside the central bore 22.1 are provided a set of, here three, guide holes 22.2 that are circumferentially evenly distributed and that each displaceably receive one of a corresponding number of guide pins 26, only one shown in Fig. 3. The guide pins 26 are fixed in threaded bores 38 formed in the bottom of the motor support 4.3 (Fig. 5) and in the assembled condition they extend with a relatively narrow fit through the respective guide hole 22.2 and freely into the groove 21.2 of the primary piston 21. Said guide pins 26 will secure that during operation the primary piston 21 will not rotate with the lead screw 53, but will be guided for axial displacement in the cylinder 4.4 upon rotation of the lead screw 53. In this connection it shall also be noted that the space above the primary piston 21 is ventilated to the atmosphere through ventilation bores 37 formed in the motor support 4.3, to secure that the movement of the piston 21 is not resisted by any vacuum or positive pressure in said space above the piston.

The double-piston further comprises a secondary piston 23 that is displaceably connected to the primary piston 21 and that likewise has an outer diameter that is slightly smaller than the inner diameter of the cylinder inner wall 18, to be displaceable therein with a very close fit. It carries a central peg 24, one end of which is secured to the secondary piston 23, such as by means of the illustrated nut 30 and a shoulder 24.1 (see Fig. 2A) on the peg 24. An upper free end of the peg 24 carries an enlarged head 25 and is displaceably received in the central bore 22.1 of the primary piston 21. The major portion of the peg 24 has an outer diameter that is slightly smaller than the inner diameter of the lower end of the central bore 22.1 of the primary piston 21 so that a relative movement of the primary and secondary pistons 21 and 23, respectively, is guided by the close fit there between. In order to fully seal any gap between the peg 24 and the central bore 21.1 an O-ring 40 is preferably positioned in a ring groove opening into said lower end of the central bore 21.1 of the primary piston 21. Above said lower end is formed a step 21.3 in the central bore 21.1, serving as a stop for the enlarged head 25 of the peg 24, and thereby determining the maximum spacing between the relatively moveable primary and secondary pistons 21 and 23, respectively. In the opposite direction, the spacing there between is restricted by the engagement of the enlarged head 25 with the free end of the lead screw 53, and thus depending upon the axial position of the primary piston 21 on the lead screw 53 and therefore in the cylinder 4.4, as will be explained below. Ultimately, at the end of the later described dispensing position DP (see Fig. 7B), the primary and secondary pistons directly engage one another, so that said spacing is zero.

A product metering chamber 19 is formed between the primary piston 21, which sealingly engages the inner wall 18 of the cylinder 4.4 during full displacement of the metering chamber between a loading position LP and the dispensing position DP, and the secondary piston 23 that is displaceably supported in the primary piston. The primary 21 and secondary 23 pistons are relatively displaceable between a fully extended end position, in which the metering chamber 19 is expanded to a fixed maximum volume, and a fully retracted position, wherein the metering chamber is collapsed to a minimum, approximately zero volume.

The secondary piston 23 has a general disc shape, but is provided with a number of, here four, cutouts 29 (Fig. 4) that are formed in a lower surface 23.1 thereof The cutouts 29 have a generally semicircular shape that is open towards the outer circumference of the piston 23. They extend axially over a major portion of the piston 23, but not fully therethrough, so that the outer periphery of the piston 23 is maintained intact and unbroken at the upper side of the piston. In the dispensing position DP of the dispensing means 4, said cutouts 29 provide a passage for the product P past the secondary piston 23, thereby allowing the product P to be discharged from the metering chamber 19 to flow to the dispensing outlet (34) during the reduction of the volume of the metering chamber 19, as will be explained further below.

In the dispensing means 4 for dispensing defined quantities of the flowable product being supplied under pressure thereto, as described above, the variable volume metering chamber 19 is received in the cylinder 4.4, is formed between the primary and secondary pistons 21 and 23, respectively and varies in size, as defined by the double piston 21-23. Specifically, the metering chamber has an internal volume varying in size between a maximum loading volume in said loading position LP, corresponding at least to a predetermined volume of the product that is to be dispensed, and a minimum, practically zero volume in said dispensing position DP. The drive means 50-53 is activated so that the primary piston 21, which is drivingly engaged by the output member 53 of the drive means 50-53, and thereby the metering chamber 19 is displaced in the cylinder 4.4. The chamber 19 is displaced between the loading position LP, wherein it communicates with the inlet 20 and the feeding channel 9 and is sealed from the dispensing outlet 34, and the dispensing position DP wherein it communicates with the outlet 34 and is sealed from the product inlet 20. During movement of the double piston 21-23 downwardly from the upper loading position LP, as depicted in Fig. 2B and 7A, the inlet opening 20 is successively closed by the primary piston 21 acting as an inlet valve. In the loading position as well as during this downward movement the secondary piston 23 completely closes the outlet 34 and thereby acts as an outlet valve. In other words, the double-piston 21-23 may be said to have the function of a shuttle containing a fixed volume metering chamber 19 that is moved from the inlet 20 to the outlet 34 where it is collapsed and emptied by decreasing its volume to approximately zero.

In order to secure proper filling of the metering chamber 19, there is provided a pressure sensor 60 that continuously senses the internal feed pressure in the feeding channel 9 and activates the supply means 7 in the event that the feed pressure falls below a predetermined low value. In the food product application and in combination with the use of a flexible hose forming at least part of the feeding channel 9, it is preferable to use a non-contact sensor 60, such as the one that is illustrated schematically in Fig. 2B and in detail in Fig. 6. This sensor 60 senses the internal feed pressure in the channel 9 by mechanically sensing the expansion of said resilient and/or flexible hose. In particular, the sensor comprises a sensor plunge 61 that is displaceably received in a guide tube 63 that at one end carries a sensor housing 62 and at the other end is fixed to an upper portion of the upper housing portion 4.1. The sensor housing 62 encloses a portion of the hose 9 so that the plunge 61 may engage the outer surface of the hose. The plunge 61 is constantly biased against the hose 9 by means of springs 64 that are attached to a sensor base 65 receiving a micro switch 66 therein. The position of the base 65 is adjustable by means of an adjusting screw 68 engaging an inclined surface 67 of the base 65. Expansion of the hose 9 varies with the internal feed pressure therein, so that the pressure may be constantly sensed by the plunge 61. When the pressure lies within a chosen range, the plunge 61 is moved by the expanding hose 9 against the force of the springs 64 to close the switch 66 and thereby deactivate the supply means 7. Then, when the internal pressure falls outside said range, the hose 9 diameter will be reduced so that the springs 64 push the plunge 61 outwardly to a position where it releases the switch 66 and the supply means 7 is activated again to restore and continuously maintain the feed pressure of the product in the feeding channel 9.

The system 1 comprises means for sensing the arrival of the pistons 21, 23 at the respective end position, namely the loading position LP and the dispensing position DP. Such means may include position sensors (not shown) at the respective end position, which send a signal to a motor circuit upon sensing the arrival of the double piston at said position. Said signal will then cause a reversing of the direction of rotation of the lead screw 53 in both positions and will stop the rotation in the loading position. More preferably, a motor control circuit (not shown) is used that in a known manner changes the direction of rotation of the motor 50 when the resistance to the rotation of the lead screw 53 increases as the double-piston 21-23 reaches an end position and is halted. This increased resistance to the rotation causes an increase of the current and effect supplied to the motor, which in turn causes a resistor to control a transistor that in turn controls the change of direction of the motor 50 in either end position and then stops the motor 50 in the loading position to end the cycle. This solution also protects the drive line in the case that the movement of the pistons 21, 23 would be stopped by a hard solid piece in the condiment in question or for some other reason. In such a case the control circuit would cause the motor 50 to be reversed and the cycle would be repeated.

The operation of the system 1 as well as a method of the invention will now be explained with reference to an illustration of a basic embodiment thereof in Figs. 7A-D. Said drawings illustrate a lower portion of the dispensing means 4, from the motor support 4.3 down and sectioned from the cylinder 4.4 down, in four different phases of a dispensing cycle. In said embodiment, the cycle starts in a loading position LP of the dispensing means 4, illustrated in Fig. 7A as well as in Fig. 2. In other words, the displaceable product metering chamber 19 of the product dispensing means 4 is positioned in the loading position LP wherein it communicates with the inlet 20. Each time that a cycle is completed the dispensing means 4 automatically returns towards this loading position LP, successively opening the product inlet 20 to allow that the product P is fed into the metering chamber 19. Specifically, the primary piston 21 serves as an inlet valve opening the product inlet 20 in the loading position, successively closing the inlet during the displacement thereof from the loading position LP to the dispensing position DP, closing the inlet in the dispensing position and successively opening the inlet during a return stroke RS back towards the loading position LP. The secondary piston 23 serves as an outlet valve blocking the outlet 34 during the displacement between the loading position LP and the dispensing position DP and opening the outlet 34 in the dispensing position DP.

In the loading position the primary piston 21 has returned to its uppermost position in the cylinder 4.4 by the rotation of the lead screw 53 in the corresponding direction, so that the guide plate 22 engages the motor support 4.3. At this time the secondary piston 23 has been moved to its lowermost position relative to the primary piston 21, wherein the enlarged head 25 of its peg 24 engages the step 21.3 of the central bore 21.1. This is caused by a combination of the engagement of the lower end of the lead screw 53 with the enlarged head 25 as the primary piston 21 returns to the loading position LP, and the force applied thereto by the pressurized product P that is filled into the metering chamber 19 through the inlet 20.

The predetermined minimum feed pressure that is maintained in the feeding channel 9 at least when the metering chamber 19 communicates therewith, secures complete filling of the maximum volume of the metering chamber 19 with the product P, thereby ensuring that an exact, repeated volume of the product P is dispensed in each cycle. When a new portion of the product is to be dispensed, a user presses a start button 36 (Fig. 2B) on the dispensing means 4. This activates the motor 50 to rotate the feed screw 53 in the direction causing the primary piston 21 to move axially downwardly towards the dispensing position DP (Fig. 7B). The metering chamber 19 is filled with the product P under the feed pressure, so that said maximum chamber volume is maintained during this movement, which takes place practically without any resistance, all the way until the inlet 20 is closed by the primary piston 21 wall. Then, the metering chamber 19 is completely sealed between the cylinder 4.4 inner wall 18 and the two pistons 21, 23. Therefore, during this movement from the loading position LP and to the dispensing position DP, the primary piston 21 acts as the inlet valve closing the inlet 20, the secondary piston 23 acts as the outlet valve closing the outlet 34, and the fixed volume chamber 19 is shuttled down towards the dispensing position.

The downward movement of the fixed volume chamber 19 continues until the secondary piston enters the increased diameter section 31 of the cylinder 4.4, immediately above the bottom wall 32 in which the dispensing outlet 34 is formed. The front end 23A of the secondary piston 23 engages and is supported by the bottom wall 32 in said dispensing position DP, to start the dispensing, as is illustrated in Fig. 7B. Since the axial length of the increased diameter section 31 exceeds that of the secondary piston 23 and the inner diameter of the section 31 clearly exceeds the outer diameter of the secondary piston 23, the halting of the piston 23 by its engagement with the bottom surface 32 will open the "outlet valve" to the outlet 34. In other words, continued downward movement of the primary piston 21 will successively collapse the chamber 19, reducing its volume by forcing out the product through the section 31, outside the secondary piston 23, and through the cutouts 29 provided in the front end of the secondary piston to allow dispensing of the product P past the secondary piston and the cylinder bottom wall 32, to the outlet 34 and through the membrane 35.

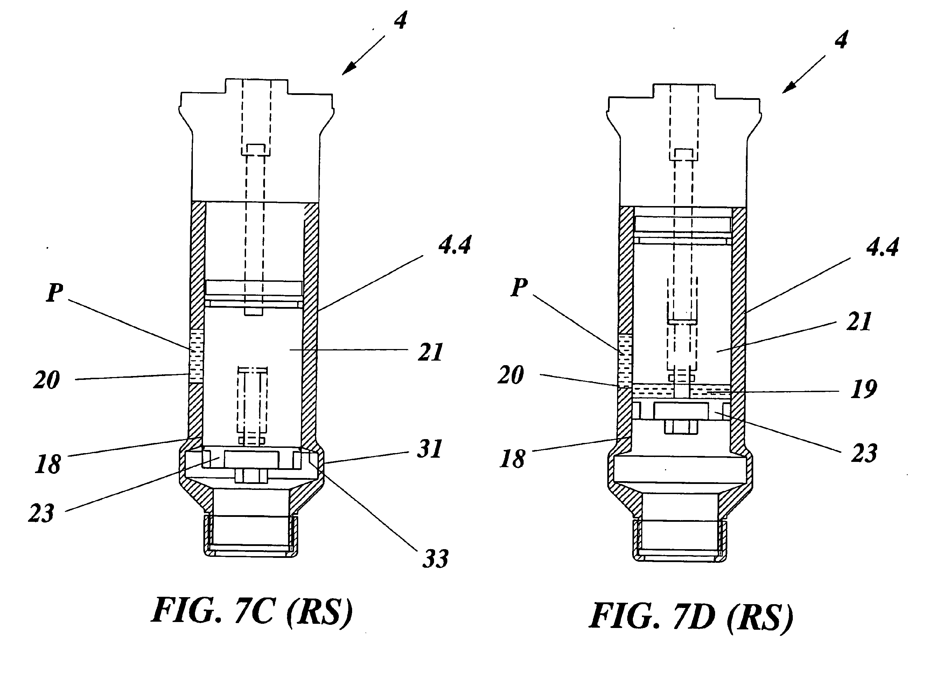

When the full metered volume of the product P has been dispensed from the chamber 19, the primary piston 21 engages the secondary piston 23, stopping the rotation of the lead screw 53 and causing the direction of rotation of the screw 53 to be automatically reversed, as described. This initiates the return stroke RS, illustrated in Fig. 7C, of the double piston 21-23 and the now fully collapsed metering chamber 19. The primary piston 21 is positively driven or displaced upwardly by the rotation of the lead screw 53 and the secondary piston 23 is caused to move along by adhering to the thin film of the product remaining on the bottom of the primary piston. To enhance this adhering effect, the above mentioned groove 21.4 may be provided in the lower surface of the primary piston 21, securing that an amount of the product P remains therein. However, as it reaches the inner wall 18 of the narrower main cylinder section 4.4, the secondary piston 23 forms a check valve with the cylinder wall 18, closing the product outlet 34 during the return stroke RS toward the loading position LP. This results in a separation of the two pistons 21, 23 and in the creation of a vacuum in the metering chamber 19 during a subsequent phase of the return stroke RS. The starting point of this phase is illustrated in Fig. 7D. This separation of the pistons 21, 23 and expansion of the metering chamber 19 occurs when the lower edge of the primary piston 21 passes the lower edge of the inlet 20 and the bottom end of the lead screw engages the enlarged head 25 of the peg 24 of the secondary piston 23. It has the effect of assisting in filling the chamber 19 with a new "dose" of the product. In this manner the time required for filling the chamber 19 may be reduced and the dispensing frequency or rate may be correspondingly increased. As the metering chamber 19 is filled during the remainder of the return stroke RS it is expanded to its maximum, predetermined volume and the system is ready for another cycle.

By providing an uninterrupted flow of the product, at a chosen minimum pressure, up to the inlet of the dispensing head and by providing the metering chamber in the actual dispensing head, a very compact system is provided. By forming the metering chamber that has a predetermined fixed maximum volume and is displaceable as a shuttle between the loading position and a dispensing position wherein the metering chamber is collapsed for dispensing the fixed product volume, a very quick and accurate metering or dosing of the product is achieved in a dispensing head that is still easily maneuverable and overall user friendly. In testing the invention, with the system configured as described, a dispensing rate of up to 3 portions or doses per second was obtained when working with a low viscosity product such as mayonnaise and the average accuracy in the dosing was higher than 0,1g. The system was equally well suited for products having solid parts, such as pieces of cucumber or onion, therein. In effect, any solid part remaining between the secondary piston 23 and the bottom wall 32 or the upper inclined wall 33 were easily cut through by the relatively sharp edges of the piston, and could not disturb the dispensing in any way: Thus, the invention as described did well serve the objects of the invention.

The invention has been described in connection with what is presently considered the most practical and preferred embodiment for the intended application, but it is to be understood that the invention is not to be limited to the disclosed embodiments. Thus the invention is not restricted to the use of the mentioned hose pump or the externally provided pressure sensors in applications where contamination or the product is not a problem. In other variants, the dispensing means may be provided with another drive line than the disclosed electrical motor-lead screw, which would serve the same purpose. In applications where the dispensed product does not cause the secondary piston to adhere to the primary piston, a weak spring may be provided in the primary piston, urging the secondary piston to initially follow the primary piston until the check valve is formed. Also, the invention has been described and illustrated herein with specific reference to an application for condiments, but it should be emphasized that it is in no way restricted to such applications. The basic principles of the invention may therefore also be applied to the dispensing of other foodstuffs as well as to other products such as glue or detergent.

The invention is therefore intended to cover various modifications and equivalent arrangements included within the scope of the appended claims.

## Claims

1. A system for dispensing flowable products (P), having a container (5) containing a product, supply means (7) for feeding the product from the container and into a feeding channel (9) and for applying a feed pressure to the product in the feeding channel and a product dispensing means (4) having a product inlet (20) to which the feeding channel is connected, **characterized by:**
- a product metering chamber (19) being received in a cylinder (4.4) of the dispensing means (4);
- drive means (50-53) for displacing the metering chamber in the cylinder, between a loading position (LP) wherein it communicates with the feeding channel (9) and is sealed from a dispensing outlet (34) and a dispensing position (DP) wherein it communicates with the dispensing outlet and is sealed from the product inlet;
- said metering chamber having an internal volume varying between a maximum volume in said loading position (LP), corresponding at least to a predetermined volume of the product that is to be dispensed, and a minimum volume in said dispensing position (DP).

2. A system according to claim 1, **characterized in that** the metering chamber (19) is formed between a primary piston (21) that sealingly engages an inner wall (18) of the cylinder (4.4) during the full displacement of the metering chamber between the loading position (LP) and the dispensing position (DP) and a secondary piston (23) that is supported in the primary piston for displacement between a fully extended end position, wherein the metering chamber (19) has its maximum volume, and a fully retracted position, wherein the metering chamber has its minimum volume and **in that** the main piston is drivingly connected to an output member (53) of the drive means (50-53).

3. A system according to claim 2, **characterized in that** the primary piston (21) serves as an inlet valve opening the product inlet (20) in the loading position (LP), successively closing the inlet during the displacement thereof from the loading position to the dispensing position (DP), closing the inlet in the dispensing position and successively opening the inlet during a return stroke (RS) towards the loading position and **in that** the secondary piston (23) serves as an outlet valve blocking the product outlet (34) during the displacement thereof between the loading position and the dispensing position and opening the outlet in the dispensing position.

4. A system according to claims 2 or 3, **characterized in that** the secondary piston (23) serves as a check valve closing the product outlet (34) during the return stroke (RS) toward the loading position (LP), to thereby create a vacuum in the metering chamber (19) during the return stroke.

5. A system according to any of claims 2-4, **characterized in that** the cylinder (4.4) has an increased diameter section (31) immediately above a bottom wall (32) in which the dispensing outlet (34) is formed and against which a front end (23A) of the secondary piston (23) is supported in said dispensing position (DP), **in that** the axial length of the increased diameter section (31) exceeds that of the secondary piston and by cutouts (29) provided in the front end of the secondary piston to allow dispensing of the product (P) past the secondary piston and the cylinder bottom wall (32).

6. A system according to any of claims 1-5 for dispensing a product being sensitive to contamination or exposure to air, **characterized in that** the supply means (7) is a peristaltic pump, especially a hose pump, **in that** at least a section of the feeding channel (9) is formed by a resilient, flexible hose and by a non-contact sensor (60) sensing the internal feed pressure by mechanically sensing the expansion of said flexible hose.

7. A dispensing means (4) for dispensing defined quantities of a flowable product (P) being supplied under pressure thereto, **characterized by** comprising:
- a primary piston (21) being displaceable in a cylinder (4.4);
- a secondary piston (23) being displaceably connected to the primary piston;
- a metering chamber (19) being formed between the relatively moveable primary and secondary pistons and an inner wall (18) of the cylinder;
- a drive means (50-53) connected to the primary piston for positively driving it and the formed metering chamber between a loading position (LP), wherein the chamber communicates with a product inlet (20) in the cylinder, and a dispensing position (DP), wherein the chamber communicates with a product outlet (34) in the cylinder, and in a return stroke (RS) back to the loading position.

8. A device according to claim 7, **characterized in that** the primary piston (23) serves as an inlet valve opening the communication to the inlet (20) in the loading position (LP) and successively closing said inlet during part of the displacement thereof from the loading position (LP) to the dispensing position (DP), closing the inlet in the dispensing position and successively opening the inlet during the return stroke (RS) towards the loading position and **in that** the secondary piston (23) serves as an outlet valve blocking the outlet (34) during the displacement thereof between the loading position and the dispensing position and opening the outlet in the dispensing position.

9. A device according to claim 7 or 8, **characterized in that** that the secondary piston (23) serves as a check valve closing the outlet (34) during the return stroke (RS) toward the loading position (LP), to thereby create a vacuum in the metering chamber (19) during the return stroke.

10. A device according to any of claims 7-9, **characterized by** an increased diameter section (31) in the cylinder (4.4), immediately above an inclined bottom wall (32) in which the dispensing outlet (34) is formed and against which a front end (23A) of the secondary piston (23) is supported in said dispensing position (DP), in that the inner diameter of the increased diameter section exceeds the outer diameter of the secondary piston, in that the axial length of the increased diameter section (31) exceeds that of the secondary piston and by cutouts (29) provided in the front end of the secondary piston to allow dispensing of the product (P) past the secondary piston and the cylinder bottom wall (32).

11. A device according to any of claims 7-10, **characterized in that** the primary and secondary pistons (21 and 23, respectively) are relatively displaceable between an extended position in which the metering chamber (19) is expanded to a fixed maximum volume and a retracted position in which the metering chamber is collapsed to an approximately zero volume.

12. A device according to any of claims 7-11, **characterized in that** the drive means (50-53) includes a drive motor (50) being drivingly connected to a lead screw (53) that engages a nut (27) being fixed to the primary piston (21) and means for reversing the motor in end positions of the primary piston that correspond to the dispensing (DP) and loading (LP) positions.

13. A method of administering flowable products (P), wherein a product being received in a container (5), is fed by a supply means (7) from the container, through a feeding channel (9) and to an inlet (20) of a product dispensing means (4) from which portions of the product are dispensed, **characterized by** the following steps:
- continuously maintaining a feed pressure of the product in the feeding channel by the supply means;
- positioning a displaceable product metering chamber (19) of the product dispensing means (4) in a loading position (LP) wherein it communicates with the inlet and wherein it has an expanded maximum internal volume corresponding at least to a predetermined volume of the product that is to be dispensed;
- displacing the metering chamber from the loading position while maintaining its internal volume, thereby interrupting the communication between the feeding channel and said chamber;
- continuing displacement of said sealed chamber towards a dispensing position (DP);
- halting the metering chamber in the dispensing position (DP) wherein the chamber is brought to communicate with a dispensing outlet (34);
- successively reducing the volume of the metering chamber to thereby dispense the predetermined volume of the product; and
- successively increasing the volume of the metering chamber to its maximum volume during displacement thereof back to the loading position.

14. A method according to claim 13, **characterized by:**
- continuously sensing the feed pressure in the feeding channel (9);
- controlling the product supply means (7) based on said sensing of the feed pressure to maintain the predetermined minimum feed pressure in the feeding channel at least when the metering chamber (19) communicates therewith;
- defining said variable volume metering chamber between two relatively displaceably connected, primary and secondary pistons (22 and 23, respectively) and a piston receiving cylinder (4.4); and
- providing a passage for the product (P) past the secondary piston at the dispensing position (DP) thereby allowing the product to flow to the dispensing outlet (34) during the reduction of the volume of the metering chamber.

15. A method according to claim 14, **characterized by** connecting a drive means (50-53) to the primary piston (21) and by displacing the metering chamber (19) by positively displacing the primary piston (21) in the cylinder (4.4) by means of the drive means.

16. A method according to any of claims 12-15, **characterized by** creating a vacuum in the metering chamber (19) during a return stroke (RS) thereof, thereby enhancing filling of the chamber.

17. A method according to any of claims 12-16, for dispensing a product (P) that is sensitive to contamination, **characterized by** providing a resilient hose forming at least a part of the feeding channel (9), by sensing the feed pressure in said hose by non-contact sensing of the expansion thereof.

18. A method according to claim 17, **characterized by** producing the feed pressure in the feeding channel (9) by means of a pump mechanism that does not come directly into contact with the product, preferably a hose pump acting on a hose part of the feeding channel.

## Patentansprüche

1. System zum Ausgeben fließfähiger Produkte (P), die einen ein Produkt enthaltenden Behälter (5), Zuführungsmittel (7) zur Leitung des Produktes aus dem Behälter und in einen Zufuhrkanal (9) sowie zur Beaufschlagung des Produktes mit einem Förderdruck im Zufuhrkanal, sowie ein eine Produkteintrittsöffnung (20) aufweisendes Produktspendemittel (4), mit dem der Zufuhrkanal verbunden ist, aufweist,
**gekennzeichnet durch**
- eine Produktmesskammer (19), die in einem Zylinder (4.4) des Zuführungsmittels (4) aufgenommen ist;
- Antriebsmittel (50-53) zur Verschiebung der Messkammer in den Zylinder zwischen einer Ladeposition (LP), in der sie mit dem Zufuhrkanal (9) verbunden ist und von einer Austrittsöffnung (34) abgedichtet ist, und einer Ausgabeposition (DP), in der sie mit der Austrittsöffnung verbunden ist und von der Eintrittsöffnung abgedichtet ist;
- wobei die Messkammer ein Innenvolumen im Bereich zwischen einem mindestens einem vorbestimmten Volumen des auszugebenden Produktes entsprechenden Höchstvolumen in der Ladeposition (LP) und einem Mindestvolumen in der Ausgabeposition (DP) aufweist.

2. System nach Anspruch 1,
**dadurch gekennzeichnet, dass** die Messkammer (19) zwischen einem Hauptkolben (21), der mit einer Innenwand (18) des Zylinders (4.4) während der ganzen Verschiebung der Messkammer zwischen der Lade-(LP) und der Ausgabeposition (DP) dichtend in Eingriff geht, sowie einem Nebenkolben (23) gebildet ist, der zur Verschiebung zwischen einer vollständig ausgefahrenen Endposition, in der die Messkammer (19) ihr Höchstvolumen aufweist, und einer vollständig eingefahrenen Position, in der die Messkammer ihr Mindestvolumen aufweist, vom Hauptkolben abgestützt ist, und dass der Hauptkolben mit einem Ausgangselement (53) des Antriebsmittels (50-53) in Antriebsverbindung steht.

3. System nach Anspruch 2,
**dadurch gekennzeichnet, dass** der Hauptkolben (21) als Einlassventil zum Öffnen der Eintrittsöffnung (20) in der Ladeposition (LP), zur anschließenden Schließung der Eintrittsöffnung während deren Verschiebung von der Lade- in die Ausgabeposition (DP), zur Schließung der Eintrittsöffnung in der Ausgabeposition und zum anschließenden Öffnen der Eintrittsöffnung während eines Rückhubs (RS) hin zur Ladeposition fungiert, und dass der Nebenkolben (23) als Ablassventil zur Sperrung der Eintrittsöffnung (34) während deren Verschiebung zwischen der Lade- und der Ausgabeposition sowie zur Öffnung in der Ausgabeposition fungiert.

4. System nach Anspruch 2 oder 3,
**dadurch gekennzeichnet, dass** der Nebenkolben (23) als ein Rückschlagventil zur Schließung der Austrittsöffnung (34) während des Rückhubs (RS) hin in die Ladeposition fungiert, um so während des Rückhubs in der Messkammer (19) ein Vakuum zu schaffen.

5. System nach einem der Ansprüche 2 - 4,
**dadurch gekennzeichnet, dass** der Zylinder (4.4) unmittelbar über einer unteren Wand (32) einen Abschnitt (31) mit erhöhtem Durchmesser aufweist, in dem die Austrittsöffnung (34) ausgebildet ist, und gegen den ein vorderes Ende (23A) des Nebenkolbens (23) in der Ausgabeposition (DP) abgestützt ist, dass die axiale Länge des Abschnitts (31) mit erhöhtem Durchmesser die des Nebenkolbens übersteigt, sowie durch Ausschnitte (29) im vorderen Ende des Nebenkolbens zum Ausgeben des Produktes (P) über den Hauptkolben und die untere Wand (32) des Zylinders.

6. System nach einem der Ansprüche 1 -5 zum Spenden eines gegenüber Verunreinigungen oder Luft empfindlichen Produktes,
**dadurch gekennzeichnet, dass** das Zuführungsmittel (7) eine Peristaltik-Pumpe, vorzugsweise eine Schlauchpumpe ist, dass mindestens ein Abschnitt des Zufuhrkanals (9) durch einen belastbaren, flexiblen Schlauch und einen durch mechanische Erkennung der Erweiterung des flexiblen Schlauchs den inneren Förderdruck erkennenden berührungslosen Sensor (60) ausgebildet ist.

7. Zuführungsmittel (4) zum Ausgeben bestimmter Mengen eines unter Druck zugeführten fließfähigen Produktes (P),
**dadurch gekennzeichnet, dass** es folgendes umfasst:
- einen in einem Zylinder (4.4) verschiebbaren Hauptkolben (21);
- einen mit dem Hauptkolben verschiebbar verbundenen Nebenkolben (23);
- eine zwischen den relativ zueinander verschiebbaren Haupt- und Nebenkolben und einer Innenwand (18) des Zylinders ausgebildete Messkammer (19);
- ein mit dem Hauptkolben zum positiven Antrieb des Hauptkolbens und der ausgebildeten Messkammer zwischen einer Ladeposition (LP), in der die Kammer mit einer Eintrittsöffnung (20) im Zylinder verbunden ist, und einer Ausgabeposition (DP), in der die Kammer mit einer Austrittsöffnung (34) im Zylinder verbunden ist, sowie in einem Rückhub (RS) zurück in die Ladeposition verbundenes Antriebsmittel (50 - 53).

8. Vorrichtung nach Anspruch 7,
**dadurch gekennzeichnet, dass** der Hauptkolben (23) als Einlassventil zum Öffnen der Verbindung mit der Eintrittsöffnung (20) in der Ladeposition (LP) und zur anschließenden Schließung der Eintrittsöffnung während eines Teils seiner Verschiebung von der Lade- (LP) in die Ausgabeposition (DP), zur Schließung der Eintrittsöffnung in der Ausgabeposition sowie zur anschließenden Eröffnung der Eintrittsöffnung während des Rückhubs (RS) hin zur Ladeposition fungiert, und dass der Nebenkolben (23) als Ablassventil zur Sperrung der Austrittsöffnung (34) während deren Verschiebung zwischen der Lade- und der Ausgabeposition sowie zum Öffnen der Austrittsöffnung in der Ausgabeposition fungiert.

9. Vorrichtung nach Anspruch 7 oder 8,
**dadurch gekennzeichnet , dass** der Nebenkolben (23) als ein Rückschlagventil zur Schließung der Austrittsöffnung (34) während des Rückhubs (RS) hin in die Ladeposition (LP) fungiert, um so während des Rückhubs in der Messkammer (19) ein Vakuum zu schaffen.

10. Vorrichtung nach einem der Ansprüche 7-9,
**gekennzeichnet** t durch einen Abschnitt (31) mit erhöhtem Durchmesser im Zylinder (4.4) unmittelbar über einer schrägen unteren Wand (32), in dem die Austrittsöffnung (34) ausgebildet ist, und gegen den ein vorderes Ende (23A) des Nebenkolbens (23) in der Ausgabeposition (DP) abgestützt ist, dass der Innendurchmesser des Abschnitts mit erhöhtem Durchmesser den Außendurchmesser des Nebenkolbens übersteigt, dass die axiale Länge des Abschnitts mit erhöhtem Durchmesser (31) die des Nebenkolbens übersteigt, sowie durch Ausschnitte (29) im vorderen Ende des Nebenkolbens zum Ausgeben des Produktes (P) über den Nebenkolben und die untere Wand (32) des Zylinders vorbei.

11. Vorrichtung nach einem der Ansprüche 7-10,
**dadurch gekennzeichnet, dass** der Haupt- und Nebenkolben (21 bzw. 23) zwischen einer ausgefahrenen Position, in der die Messkammer (19) bis zum festgelegten Höchstvolumen erweitert ist, und einer eingefahrenen Position, in der das Volumen der Messkammer etwa gleich Null ist, relativ verschiebbar sind.

12. Vorrichtung nach einem der Ansprüche 7-11,
**dadurch gekennzeichnet, dass** das Antriebsmittel (50 - 53) einen Antriebsmotor (50) umfasst, der mit einer Leitspindel (53), die mit einer am Hauptkolben (21) befestigten Mutter (27) in Eingriff ist, sowie mit Mitteln zur Umkehrung des Motors in den Endpositionen des Hauptkolbens, die den Ausgabe- (DP) und Ladepositionen (LP) entsprechen, in Antriebsverbindung steht.

13. Verfahren zur Verabreichung fließfähiger Produkte (P), wobei ein in einem Behälter (5) aufgenommenes Produkt von einem Zuführungsmittel (7) aus dem Behälter durch einen Zufuhrkanal (9) und eine Eintrittsöffnung (20) eines Zuführungsmittels (4), aus den Portionen des Produktes ausgegeben werden, geleitet wird,
**gekennzeichnet** t durch die nachfolgenden Schritte:
- kontinuierliches Aufrechterhalten eines Förderdrucks des Produktes im Zufuhrkanal durch das Zuführungsmittel;
- Positionieren einer verschiebbaren Messkammer (19) des Produktausgabemittels (4) in einer Ladeposition (LP), in der sie mit der Eintrittsöffnung verbunden ist und ein erweitertes Innenvolumen aufweist, das mindestens einem vorbestimmten Volumen des auszugebenden Produktes entspricht;
- Verschieben der Messkammer aus der Ladeposition unter Aufrechterhaltung des Innenvolumens, wodurch die Verbindung zwischen dem Zufuhrkanal und der Kammer unterbrochen wird;
- fortgesetzte Verschiebung der verschlossenen Kammer in eine Ausgabeposition (DP);
- Halten der Messkammer in der Ausgabeposition (DP), in der die Kammer mit einer Austrittsöffnung (34) in Verbindung gebracht wird;
- schrittweises Reduzieren des Volumens der Messkammer zum Ausgeben des vorbestimmten Volumens des Produktes; und
- schrittweises Erhöhen des Volumens der Messkammer auf dessen Höchstvolumen während dessen Verschiebung zurück in die Ladeposition.

14. Verfahren nach Anspruch 13,
**gekennzeichnet** t durch
- kontinuierliches Erkennen des Förderdrucks im Zufuhrkanal (9);
- Steuern des Zuführungsmittels (7) aufgrund der Erkennung des Förderdrucks zur Aufrechterhaltung des vorbestimmten Mindestförderdrucks im Zufuhrkanal mindestens dann, wenn die Messkammer (19) damit verbunden ist;
- Abgrenzen der Messkammer mit variablem Volumen zwischen zwei relativ verschiebbaren, miteinander verbundenen Haupt- und Nebenkolben (22 bzw. 23) und einem Kolbenaufnahmezylinder (4.4); und
- Vorsehen eines Durchgangs zur Leitung des Produktes (P) über den Nebenkolben in der Ausgabeposition (DP), wodurch das Produkt während der Reduzierung des Volumens der Messkammer zur Austrittsöffnung (34) fließen kann.

15. Verfahren nach Anspruch 14,
**gekennzeichnet durch** das Verbinden eines Antriebsmittels (50 - 53) mit dem Hauptkolben (21) und **durch** Verschließen der Messkammer (19) des Hauptkolbens (21) im Zylinder (4.4) mittels des Antriebsmittels.

16. Verfahren nach einem der Ansprüche 13-15,
**gekennzeichnet durch** das Erzeugen eines Vakuums während eines Rückhubs (RS) in der Messkammer (19), wodurch die Füllung der Kammer verstärkt wird.

17. Verfahren nach einem der Ansprüche 13 - 16 zum Ausgeben eines gegenüber Verunreinigungen empfindlichen Produktes (P),
**gekennzeichnet durch** das Vorsehen eines elastischen Schlauchs, der mindestens einen Teil des Zufuhrkanals (9) bildet, **durch** Erkennen des Förderdrucks im Schlauch mittels berührungsloser Erkennung von dessen Erweiterung.

18. Verfahren nach Anspruch 17,
**gekennzeichnet durch** Erzeugen des Förderdrucks im Zufuhrkanal (9) mittels eines Pumpenmechanismus, der mit dem Produkt nicht unmittelbar in Kontakt tritt, vorzugsweise einer auf einen Schlauchabschnitt des Zufuhrkanals wirkenden Schlauchpumpe.

## Revendications

1. Système pour distribuer des produits fluides (P), ayant un contenant (5) contenant un produit, un moyen d'alimentation (7) pour alimenter le produit à partir du contenant et dans un canal d'alimentation (9) et pour appliquer une pression d'alimentation au produit dans le canal d'alimentation et un moyen de distribution de produit (4) ayant une entrée de produit (20) à laquelle est relié le canal d'alimentation, **caractérisé par** :
- une chambre de dosage de produit (19) qui est reçue dans un cylindre (4.4) du moyen de distribution (4) ;
- un moyen d'entraînement (50-53) pour déplacer la chambre de dosage dans le cylindre, entre une position de chargement (LP) dans laquelle elle communique avec le canal d'alimentation (9) et est scellée de manière étanche vis-à-vis d'une sortie de distribution (34) et une position de distribution (DP) dans laquelle elle communique avec la sortie de distribution et est scellée de manière étanche vis-à-vis de l'entrée de produit ;
- ladite chambre de dosage ayant un volume interne variant entre un volume maximal dans ladite position de chargement (LP), correspondant au moins à un volume prédéterminé du produit qui doit être distribué, et un volume minimal dans ladite position de distribution (DP).

2. Système selon la revendication 1, **caractérisé par le fait que** la chambre de dosage (19) est formée entre un piston primaire (21) qui est en contact étanche avec une paroi interne (18) du cylindre (4.4) durant tout le déplacement de la chambre de dosage entre la position de chargement (LP) et la position de distribution (DP) et un piston secondaire (23) qui est supporté dans le piston primaire pour un déplacement entre une position extrême entièrement étendue, dans laquelle la chambre de dosage (19) a son volume maximal, et une position entièrement rétractée, dans laquelle la chambre de dosage a son volume minimal, et **par le fait que** le piston principal est relié en entraînement à un élément de sortie (53) du moyen d'entraînement (50-53).

3. Système selon la revendication 2, **caractérisé par le fait que** le piston primaire (21) sert de soupape d'entrée ouvrant l'entrée de produit (20) dans la position de chargement (LP), puis fermant l'entrée durant le déplacement de celui-ci de la position de chargement à la position de distribution (DP), fermant l'entrée dans la position de distribution puis ouvrant l'entrée durant une course de retour (RS) vers la position de chargement et **par le fait que** le piston secondaire (23) sert de soupape de sortie bloquant la sortie de produit (34) durant le déplacement de celui-ci entre la position de chargement et la position de distribution et ouvrant la sortie dans la position de distribution.

4. Système selon l'une des revendications 2 ou 3, **caractérisé par le fait que** le piston secondaire (23) sert de soupape de non-retour fermant la sortie de produit (34) durant la course de retour (RS) vers la position de chargement (LP), pour créer ainsi un vide dans la chambre de dosage (19) durant la course de retour.

5. Système selon l'une quelconque des revendications 2 à 4, **caractérisé par le fait que** le cylindre (4.4) a une section à diamètre accru (31) immédiatement au-dessus d'une paroi inférieure (32) dans laquelle est formée la sortie de distribution (34) et contre laquelle une extrémité avant (23A) du piston secondaire (23) est supportée dans ladite position de distribution (DP), **par le fait que** la longueur axiale de la section à diamètre accru (31) dépasse celle du piston secondaire et par des découpes (29) pratiquées dans l'extrémité avant du piston secondaire pour autoriser une distribution du produit (P) au-delà du piston secondaire et de la paroi inférieure (32) du cylindre.

6. Système selon l'une quelconque des revendications 1 à 5 pour distribuer un produit qui est sensible à une contamination ou à une exposition à l'air, **caractérisé par le fait que** le moyen d'alimentation (7) est une pompe péristaltique, en particulier une pompe à tuyau, **par le fait qu'**au moins une section du canal d'alimentation (9) est formée par un tuyau souple élastique et par un capteur sans contact (60) détectant la pression d'alimentation interne par détection mécanique de l'expansion dudit tuyau souple.

7. Moyen de distribution (4) pour distribuer des quantités définies d'un produit fluide (P) qui lui est alimenté sous pression, **caractérisé par le fait qu'**il comprend :
- un piston primaire (21) qui est déplaçable dans un cylindre (4.4) ;
- un piston secondaire (23) qui est relié de manière déplaçable au piston primaire ;
- une chambre de dosage (19) qui est formée entre les pistons primaire et secondaire mobiles l'un par rapport l'autre et une paroi interne (18) du cylindre ;
- un moyen d'entraînement (50-53) relié au piston primaire pour entraîner de manière positive celui-ci et la chambre de dosage formée, entre une position de chargement (LP), dans laquelle la chambre communique avec une entrée de produit (20) dans le cylindre, et une position de distribution (DP), dans laquelle la chambre communique avec une sortie de produit (34) dans le cylindre, et dans une course de retour (RS) vers la position de chargement.

8. Dispositif selon la revendication 7, **caractérisé par le fait que** le piston primaire (23) sert de soupape d'entrée ouvrant la communication vers l'entrée (20) dans la position de chargement (LP) puis fermant ladite entrée durant une partie du déplacement de celui-ci de la position de chargement (LP) à la position de distribution (DP), fermant l'entrée dans la position de distribution puis ouvrant l'entrée durant la course de retour (RS) vers la position de chargement, et **par le fait que** le piston secondaire (23) sert de soupape de sortie bloquant la sortie (34) durant le déplacement de celui-ci entre la position de chargement et la position de distribution et ouvrant la sortie dans la position de distribution.

9. Dispositif selon l'une des revendications 7 ou 8, **caractérisé par le fait que** le piston secondaire (23) sert de soupape de non-retour fermant la sortie (34) durant la course de retour (RS) vers la position de chargement (LP), pour créer ainsi un vide dans la chambre de dosage (19) durant la course de retour.

10. Dispositif selon l'une quelconque des revendications 7 à 9, **caractérisé par** une section à diamètre accru (31) dans le cylindre (4.4), immédiatement au-dessus d'une paroi inférieure inclinée (32) dans laquelle est formée la sortie de distribution (34) et contre laquelle une extrémité avant (23A) du piston secondaire (23) est supportée dans ladite position de distribution (DP), par le fait que le diamètre interne de la section à diamètre accru dépasse le diamètre externe du piston secondaire, par le fait que la longueur axiale de la section à diamètre accru (31) dépasse celle du piston secondaire et par des découpes (29) pratiquées dans l'extrémité avant du piston secondaire pour autoriser une distribution du produit (P) au-delà du piston secondaire et de la paroi inférieure (32) du cylindre.

11. Dispositif selon l'une quelconque des revendications 7 à 10, **caractérisé par le fait que** les pistons primaire et secondaire (respectivement 21 et 23) sont déplaçables l'un par rapport à l'autre entre une position étendue dans laquelle la chambre de dosage (19) est étendue à un volume maximal fixé et une position rétractée dans laquelle la chambre de dosage est réduite à un volume approximativement nul.

12. Dispositif selon l'une quelconque des revendications 7 à 11, **caractérisé par le fait que** le moyen d'entraînement (50-53) comprend un moteur d'entraînement (50) qui est relié en entraînement à une vis-mère (53) qui est en prise avec un écrou (27) qui est fixé au piston primaire (21) et un moyen pour inverser le moteur dans les positions extrêmes du piston primaire qui correspondent aux positions de distribution (DP) et de chargement (LP).

13. Procédé d'administration de produits fluides (P), dans lequel un produit qui est reçu dans un contenant (5) est alimenté par un moyen d'alimentation (7) à partir du contenant, à travers un canal d'alimentation (9) et jusqu'à une entrée (20) d'un moyen de distribution de produit (4) à partir duquel des parties du produit sont distribuées, **caractérisé par** les étapes suivantes :
- maintenir de manière continue une pression d'alimentation du produit dans le canal d'alimentation par le moyen d'alimentation ;
- positionner une chambre de dosage de produit déplaçable (19) du moyen de distribution de produit (4) dans une position de chargement (LP) dans laquelle elle communique avec l'entrée et dans laquelle elle a un volume interne maximal étendu correspondant au moins à un volume prédéterminé du produit qui doit être distribué ;
- déplacer la chambre de dosage à partir de la position de chargement tout en maintenant son volume interne, interrompant ainsi la communication entre le canal d'alimentation et ladite chambre ;
- poursuivre le déplacement de ladite chambre scellée de manière étanche vers une position de distribution (DP) ;
- arrêter la chambre de dosage dans la position de distribution (DP) dans laquelle la chambre est amenée à communiquer avec une sortie de distribution (34) ;
- puis réduire le volume de la chambre de dosage pour distribuer ainsi le volume prédéterminé du produit ; et
- puis augmenter le volume de la chambre de dosage à son volume maximal durant le déplacement de celle-ci en retour vers la position de chargement.

14. Procédé selon la revendication 13, **caractérisé par** :
- détecter de manière continue la pression d'alimentation dans le canal d'alimentation (9) ;
- commander le moyen d'alimentation en produit (7) sur la base de ladite détection de la pression d'alimentation pour maintenir la pression d'alimentation minimale prédéterminée dans le canal d'alimentation au moins lorsque la chambre de dosage (19) communique avec celui-ci ;
- définir ladite chambre de dosage à volume variable entre deux pistons primaire et secondaire reliés de manière déplaçable l'un par rapport à l'autre (respectivement 22 et 23) et un cylindre de réception de pistons (4.4) ; et
- ménager un passage pour le produit (P) au-delà du piston secondaire à la position de distribution (DP), autorisant ainsi le produit à s'écouler jusqu'à la sortie de distribution (34) durant la réduction du volume de la chambre de dosage.

15. Procédé selon la revendication 14, **caractérisé par** la liaison d'un moyen d'entraînement (50-53) au piston primaire (21) et par le déplacement de la chambre de dosage (19) par déplacement positif du piston primaire (21) dans le cylindre (4.4) à l'aide du moyen d'entraînement.

16. Procédé selon l'une quelconque des revendications 12 à 15, **caractérisé par** la création d'un vide dans la chambre de dosage (19) durant une course de retour (RS) de celle-ci, améliorant ainsi le remplissage de la chambre.

17. Procédé selon l'une quelconque des revendications 12 à 16, pour distribuer un produit (P) qui est sensible à une contamination, **caractérisé par** la disposition d'un tuyau élastique formant au moins une partie du canal d'alimentation (9), par la détection de la pression d'alimentation dans ledit tuyau par détection sans contact de l'extension de celui-ci.

18. Procédé selon la revendication 17, **caractérisé par** la production de la pression d'alimentation dans le canal d'alimentation (9) à l'aide d'un mécanisme de pompe qui ne vient pas directement en contact avec le produit, de préférence une pompe à tuyau agissant sur une partie tuyau du canal d'alimentation.
